# FASCICULE DE BREVET EUROPEEN

(11) **EP 0 481 872 B1**
(45) Date de publication et mention de la délivrance du brevet: **04.01.1995**
(21) Numéro de dépôt: 91402745.3
(22) Date de dépôt: 15.10.1991
(51) Int. Cl.: F16L 5/02, B60R 16/08

(54) **Dispositif de raccordement de deux tuyaux de part et d'autre d'un élément de cloison**
Anschlussvorrichtung zum Verbinden von zwei Rohren auf beiden Seiten eines Wandelementes
Connecting device for two pipes on both sides of a wall element

(30) Priorité: 17.10.1990 FR 9012835
(43) Date de publication de la demande: 22.04.1992
(73) Titulaire: VALEO THERMIQUE HABITACLE, 78320 Le Mesnil-Saint-Denis (FR)
(72) Inventeur: Rollett, Gérard, F-78180 Montigny-le-Bretonneux (FR)
(74) Mandataire: Gamonal, Didier

(56) Documents cités:
- CH-A- 407 675
- GB-A- 1 400 786
- US-A- 4 267 618
- US-A- 4 822 079

## Description

L'invention concerne un dispositif de raccordement de deux tuyaux de part et d'autre d'un élément de cloison.

Elle concerne plus particulièrement un dispositif de raccordement de deux tuyaux comprenant un élément de cloison muni d'une ouverture de passage et un raccord passant par ladite ouverture pour relier les deux tuyaux de part et d'autre de l'élément de cloison, le raccord étant réalisé sous la forme d'un corps creux possédant un premier embout et un second embout opposés, propres à être reliés respectivement aux deux tuyaux et situés dans le prolongement d'une partie centrale propre à s'adapter dans l'ouverture, le premier embout étant muni d'une collerette propre à venir en butée contre une première face de l'élément de cloison pour limiter l'introduction du raccord par le second embout et ce second embout étant muni d'un bourrelet propre à permettre le passage en force du second embout dans l'ouverture et à venir ensuite en butée contre une seconde face de l'élément de cloison tel que décrit dans le document US-A-4 822 079.

On connaît déjà des dispositifs de ce genre qui sont utilisés, par exemple, dans les véhicules automobiles pour assurer le raccordement de deux tuyaux souples à travers une cloison, telle qu'une cloison séparant le compartiment moteur de l'habitacle du véhicule.

Dans une application particulière, le tuyau situé dans le compartiment moteur est relié à une source de dépression, par exemple au carburateur du véhicule, et le tuyau situé dans l'habitacle est relié notamment à un vérin de dépression actionnant un volet faisant partie de l'installation de chauffage et/ou de climatisation dudit véhicule.

Le raccord assure ainsi une liaison fluidique entre les deux tuyaux, de part et d'autre de l'élément de cloison séparant le compartiment moteur et l'habitacle. Ainsi, les odeurs du compartiment moteur ne peuvent s'introduire dans l'habitacle.

Dans les dispositifs connus de ce genre, le raccord est conçu pour pouvoir être facilement introduit en force à travers l'ouverture de l'élément de cloison et permettre ensuite le raccordement des deux tuyaux.

Pour cela, on introduit le second embout du raccord au travers de l'ouverture de passage, de sorte que, lors de l'introduction, le bourrelet passe en force au travers de l'ouverture et que, en fin d'introduction, le raccord soit maintenu par la collerette et le bourrelet venant en butée respectivement contre la première face et la seconde face de l'élément de paroi.

Dans les dispositifs connus de ce genre, l'ouverture de passage de l'élément de cloison est un alésage cylindrique dont le diamètre est sensiblement égal à celui du second embout et de la partie centrale du raccord.

Il en résulte que, lors de l'introduction, le diamètre de l'ouverture tend à s'agrandir, si bien que le raccord n'est pas maintenu efficacement dans l'élément de cloison.

Par suite, si une force est exerçée sur le raccord, dans une direction opposée à celle de son introduction, par exemple pour brancher ou débrancher un tuyau, le raccord a tendance à se désolidariser de l'élément de cloison.

Une telle désolidarisation est d'autant plus à craindre que le bourrelet ne comporte pas une face de butée franche.

L'invention a notamment pour but de remédier à cet inconvénient.

Elle propose, en conséquence, un dispositif de raccordement du type défini en introduction, dans lequel l'élément de cloison est conformé en une lèvre déformable entourant l'ouverture et s'étendant obliquement pour définir un passage resserré en direction de la seconde face, ladite lèvre comportant un rebord périphérique situé du côté de la seconde face pour servir de butée à un bourrelet du raccord.

Ainsi, lors de l'introduction du raccord, la lèvre peut s'écarter facilement sous l'action du bourrelet et, en fin d'introduction du raccord, le bourrelet de ce dernier vient en butée contre le rebord périphérique de la lèvre.

Par conséquent, si le raccord est soumis à une force tendant à l'extraire de l'élément de cloison, c'est-à-dire dans une direction opposée à celle de l'introduction du raccord, la lèvre tend à se resserrer radialement vers l'intérieur et à s'opposer à l'extraction du raccord.

Avantageusement, la lèvre est délimitée par une paroi tronconique qui présente une extrémité de petit diamètre raccordée au rebord périphérique et une extrémité de grand diamètre raccordée à la première face de l'élément de cloison.

Avantageusement, le rebord périphérique est un rebord annulaire raccordé à la seconde face de l'élément de cloison par une rainure annulaire. Ceci permet de ménager une partie annulaire de plus faible épaisseur favorisant la déformation de la lèvre.

Ce rebord périphérique annulaire est de préférence plan et situé sensiblement dans le même plan que la seconde face.

Selon une autre caractéristique de l'invention, l'extrémité de grand diamètre de la paroi tronconique se raccorde à la première face de l'élément de cloison par l'intermédiaire d'un épaulement qui délimite un logement annulaire pour la collerette du raccord.

Dans une forme de réalisation préférée de l'invention, le bourrelet du raccord comporte, d'un côté, une face tronconique propre à écarter la lèvre déformable de l'élément de cloison lors de l'introduction du raccord et, de l'autre côté, une face annulaire propre à venir en butée contre le rebord périphérique de la lèvre déformable.

De préférence, cette face annulaire est perpendiculaire à l'axe tu raccord et forme un angle vif avec la face tronconique du bourrelet.

Dans la description qui suit, donnée seulement à titre d'exemple, on se réfère aux dessins annexés, sur lesquels :
- la figure 1 est une vue, partiellement en coupe axiale, d'un dispositif de raccordement selon la technique antérieure ;
- la figure 2 est une vue en coupe axiale d'un dispositif de raccordement selon l'invention ;
- la figure 3 est une vue en élévation du raccord du dispositif de la figure 2 ;
- la figure 4 est une vue d'extrémité du raccord de la figure 3 ;
- la figure 5 est une vue en coupe, à échelle agrandie, de l'élément de cloison du dispositif de la figure 2 ; et
- la figure 6 est une vue en plan de l'élément de cloison de la figure 5.

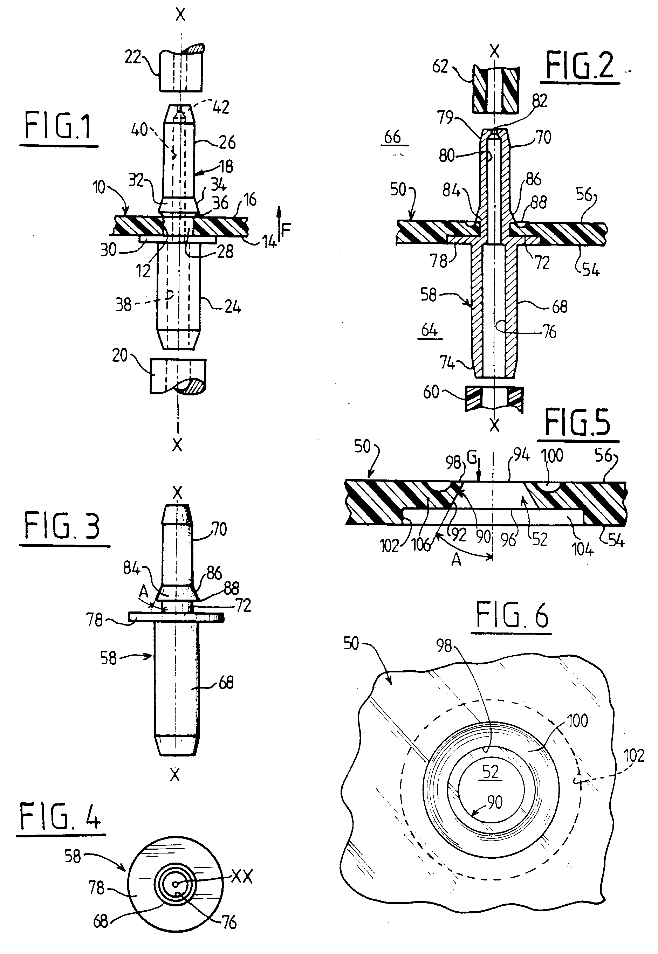

On se réfère tout d'abord à la figure 1 qui montre un dispositif selon la technique antérieure.

Ce dispositif comprend un élément de cloison 10 muni d'une ouverture 12 constituée par un alésage cylindrique débouchant sur une première face 14 et une seconde face 16 de l'élément 10.

Le dispositif comprend en outre un raccord 18 propre à passer par l'ouverture 12 pour relier deux tuyaux souples 20 et 22, situés respectivement de part et d'autre de l'élément de cloison 10.

Le raccord 18 est réalisé sous la forme d'un corps creux possédant un premier embout 24 et un second embout 26 opposés propres à être reliés respectivement aux tuyaux 20 et 22, ces deux embouts étant situés dans le prolongement d'une partie centrale 28 de forme générale cylindrique dont le diamètre est sensiblement égal à celui du second embout 26 et au diamètre de l'ouverture 12.

Le premier embout 24 est muni d'une collerette circulaire 30 propre à venir en butée contre la première face 14 de l'élément 10 pour limiter l'introduction du raccord 18 par son second embout 26 au travers de l'ouverture 12.

Le second embout 26 est muni d'un bourrelet 32 propre à permettre l'introduction en force du second embout dans l'ouverture et à venir ensuite en butée contre la seconde face 16 de l'élément de cloison 10.

Dans l'exemple, le bourrelet 32 comprend une première face tronconique 34 facilitant le passage du bourrelet au travers de l'ouverture 12 et une seconde face tronconique 36 propre à servir de butée contre la seconde face 16 de l'élément de cloison.

Le raccord 18 présente une forme de révolution autour d'un axe XX et définit intérieurement un passage de communication. Celui-ci comprend un passage cylindrique 38 formé dans l'embout 24, un passage cylindrique 40 de plus petit diamètre formé dans l'embout 26 et débouchant sur un ajutage 42 de plus petit diamètre formé dans l'extrémité libre de l'embout 26.

Pour la mise en place du raccord 18, au travers de l'élément de cloison 10, on introduit d'abord le second embout 26 suivant une direction d'introduction comme représenté par la flèche F, ce qui provoque le passage en force du bourrelet 32 à travers l'ouverture 12. En fin d'introduction, la collerette 30 vient en butée contre la première face 14 et le bourrelet 32 vient en butée, par sa face 36, contre la seconde face 16 de l'élément de cloison.

On peut ensuite raccorder les tuyaux 20 et 22 respectivement sur les embouts 24 et 26.

Toutefois, du fait que l'ouverture 12 est un simple alésage cylindrique, celle-ci a tendance à s'agrandir lors du passage du bourrelet. De plus, comme ce dernier présente une face 36 tronconique, si le raccord 18 est soumis à une force de sollicitation, dans une direction opposée à celle de la flèche F, le raccord a tendance à s'extraire de l'élément de cloison.

En outre, sous peine de ne pouvoir l'introduire dans l'ouverture 12, le diamètre du bourrelet 32 n'est que légèrement supérieur au diamètre de l'ouverture 12 ce qui facilite encore plus la tendance à l'extraction du raccord.

L'invention permet de remédier à cet inconvénient, comme on le verra plus loin en référence aux figures 2 à 6.

On se réfère tout d'abord à la figure 2 qui montre un dispositif de raccordement selon l'invention comprenant un élément de cloison 50 possédant une ouverture 52 débouchant respectivement sur une première face 54 et une deuxième face 56 de l'élément de cloison.

Le dispositif comprend en outre un raccord 58 présentant une forme de révolution autour d'un axe XX, ce dernier étant propre à être relié respectivement à deux tuyaux 60 et 62, situés respectivement de part et d'autre de l'élément de cloison.

A titre d'exemple, l'élément de cloison 50 forme séparation entre un premier compartiment 64, tel que le compartiment moteur d'un véhicule automobile, et un second compartiment 66, tel que l'habitacle du même véhicule automobile.

Le tuyau 60 peut alors être relié à une source de dépression (non représentée) telle que le carburateur du véhicule automobile et le tuyau 62 à un vérin de dépression (non représenté) propre à actionner un volet faisant partie de l'installation de chauffage et/ou de climatisation du véhicule automobile.

Le raccord 58 comprend un premier embout 68 et un second embout 70, opposés, situés dans le prolongement d'une partie centrale 72 de forme générale cylindrique.

L'embout 68 comprend une extrémité effilée 74 et définit intérieurement un passage cylindrique 76. L'embout 68 est, par ailleurs, muni d'une collerette cylindrique 78.

L'embout 70 possède un diamètre extérieur sensiblement inférieur à celui de l'embout 68 et il se termine par une partie effilée 79. Il délimite intérieurement un passage cylindrique 80 de diamètre inférieur à celui du passage 76, ce passage 80 débouchant sur un ajutage 82 au niveau de l'extrémité libre 79 de l'embout 70.

L'embout 70 est, par ailleurs, muni d'un bourrelet 84 possédant une face tronconique 86 facilitant le passage du bourrelet au travers de l'ouverture 52 et une face annulaire de butée 88 s'étendant perpendiculairement à l'axe XX et se raccordant à angle vif avec la face 86 (figures 2 et 3). Dans l'exemple, la face tronconique 86 forme avec l'axe XX un angle A de 30° (figure 3).

Comme montré aux figures 5 et 6, l'élément de cloison 50 est conformé en une lèvre déformable 90 entourant l'ouverture 52 et s'étendant obliquement pour définir un passage resserré en direction de la seconde face 56.

La lèvre 90 est délimitée par une paroi tronconique 92 dont l'extrémité 94 de petit diamètre est située du côté de la face 56 et dont l'extrémité 96 de plus grand diamètre est située du côté de la face 54. L'extrémité 94 se raccorde sur un rebord périphérique annulaire 98, ce rebord étant plan et de manière préférentielle coplanaire avec la face 56. Le rebord 98 se raccorde avec la face 56 par l'intermédiaire d'une rainure annulaire 100 s'étendant concentriquement autour du rebord 98.

L'extrémité 96 de la paroi tronconique 92 se raccorde avec un épaulement 102 délimitant un logement cylindrique 104 pour la collerette 78 du raccord 58. Ce logement présente de manière préférentielle un diamètre et une profondeur sensiblement supérieures, respectivement au diamètre et à la hauteur de la collerette 78 du raccord 58.

Dans l'exemple, la paroi tronconique 92 forme un angle A de 30° par rapport à l'axe XX de l'ouverture 52.

Du fait de la rainure annulaire 100, on ménage une partie annulaire 106 de plus faible épaisseur qui favorise la déformation de la lèvre.

Lorsque l'on introduit l'embout 70 du raccord 58, la face tronconique 86 du bourrelet 84 rencontre la paroi tronconique 92 de la lèvre 90 et provoque ainsi l'écartement radial de la lèvre 90. Cet écartement radial est favorisé par l'existence de la partie annulaire 106, de plus faible épaisseur, et par le fait que les faces tronconiques 86 et 92 ont le même angle par rapport à l'axe d'introduction.

En fin d'introduction du raccord 58, la collerette 78 vient se positionner dans le logement 104 et la face de butée 88 du bourrelet 84 vient en appui contre le rebord périphérique 98 de la lèvre 90. Par conséquent, si le raccord 58 est sollicité dans une direction opposée à celle de sa direction d'introduction, la face de butée 88 du bourrelet 84 vient appuyer sur le rebord 98 comme représenté par la flèche G sur la figure 5. Compte tenu de la conformation de la lèvre, cette dernière a tendance à se déformer radialement vers l'intérieur et à s'opposer ainsi au retrait du raccord.

Il en résulte que, après mise en place du raccord, celui-ci peut être sollicité dans une direction opposée à celle de son introduction, sans qu'il risque de quitter le logement de l'élément de paroi.

Le dispositif de l'invention trouve ainsi une application particulière dans le cas des véhicules automobiles.

## Revendications

1. Dispositif de raccordement de deux tuyaux (60,62), comprenant un élément de cloison (50) muni d'une ouverture de passage (52) et un raccord (58) propre à passer par ladite ouverture pour relier les deux tuyaux de part et d'autre de l'élément de cloison, le raccord (58) étant réalisé sous la forme d'un corps creux possédant un premier embout (68) et un second embout (70) opposés, propres à être reliés respectivement aux deux tuyaux (60,62) et situés dans le prolongement d'une partie centrale (72) propre à s'adapter dans l'ouverture (52), le premier embout (68) étant muni d'une collerette (78) propre à venir en butée contre une première face (54) de l'élément de cloison (50) pour limiter l'introduction du raccord (58) par le second embout (70), et le second embout (70) étant muni d'un bourrelet (84) propre à permettre l'introduction en force du second embout dans l'ouverture et à venir ensuite en butée contre une seconde face (56) de l'élément de cloison (50), caractérisé en ce que l'élément de cloison (50) est conformé en une lèvre déformable (90) entourant l'ouverture (52) et s'étendant obliquement pour définir un passage resserré (94) en direction de la seconde face (56), ladite lèvre (90) comportant un rebord périphérique (98) situé du côté de la seconde face (56) pour servir de butée au bourrelet (84) du raccord (58).

2. Dispositif selon la revendication 1, caractérisé en ce que la lèvre (90) est délimitée par une paroi tronconique (92) qui présente une extrémité (94) de petit diamètre raccordée au rebord périphérique (98) et une extrémité (96) de grand diamètre raccordée à la première face (54) de l'élément de paroi (50).

3. Dispositif selon l'une des revendications 1 et 2, caractérisé en ce que le rebord périphérique (98) est un rebord annulaire raccordé à la seconde face (56) de l'élément de cloison (50) par une rainure annulaire (100), ce qui permet de ménager une partie annulaire (106) de plus faible épaisseur favorisant la déformation de la lèvre.

4. Dispositif selon la revendication 3, caractérisé en ce que le rebord périphérique (98) est plan et situé sensiblement coplanaire avec la seconde face (56).

5. Dispositif selon l'une des revendications 2 à 4, caractérisé en ce que l'extrémité (96) de grand diamètre se raccorde à la première face (54) de l'élément de cloison (50) par l'intermédiaire d'un épaulement (102) délimitant un logement annulaire (104) pour la collerette (78) du raccord (58).

6. Dispositif selon l'une des revendications 2 à 5, caractérisé en ce que la paroi tronconique (92) de la lèvre (90) est inclinée de 30° par rapport à son axe XX.

7. Dispositif selon l'une des revendications 1 à 6, caractérisé en ce que le bourrelet (84) du raccord (58) comporte, d'un côté, une face tronconique (86) propre à écarter la lèvre déformable (90) de l'élément de cloison (50) lors de l'introduction du raccord et, de l'autre côté, une face annulaire (88) propre à venir en butée contre le rebord périphérique (98) de la lèvre (90).

8. Dispositif selon la revendication 7, caractérisé en ce que la face tronconique (86) du bourrelet (84) forme un angle de 30° par rapport à l'axe.

9. Dispositif selon l'une des revendications 7 et 8, caractérisé en ce que la face annulaire (88) du bourrelet (84) est perpendiculaire à l'axe XX du raccord et se raccorde à angle vif avec la face tronconique (86) du bourrelet.

## Claims

1. Device for connecting two pipes (60, 62), comprising a wall element (50) provided with a passage opening (52) and a coupling (58) suitable for passing through the said opening in order to connect the two pipes on each side of the wall element, the coupling (58) being produced in the form of a hollow body having a first connecting piece (68) and a second connecting piece (70) opposite each other, suitable for being connected respectively to the two pipes (60, 62) and situated in line with a central part (72) suitable for fitting into the opening (52), the first connecting piece (68) being provided with a collar (78) suitable for coming into abutment against a first face (54) of the wall element (50) in order to limit the insertion of the coupling (58) by means of the second connecting piece (70), and the second connecting piece (70) being provided with an enlargement (84) suitable for allowing the forcible insertion of the second connecting piece into the opening and then coming into abutment against a second face (56) of the wall element (50), characterised in that the wall element (50) is shaped so as to have a deformable lip (90) surrounding the opening (52) and extending obliquely in order to define a passage (94) narrowing in the direction of the second face (56), the said lip (90) having a peripheral rim (98) situated on the same side as the second face (56) in order to serve as a stop for the enlargement (84) on the coupling (58).

2. Device according to Claim 1, characterised in that the lip (90) is defined by a frustoconical wall (92) which has a small-diameter end (94) connected to the peripheral rim (98) and a large-diameter end (96) connected to the first face (54) of the wall element (50).

3. Device according to one of Claims 1 and 2, characterised in that the peripheral rim (98) is an annular rim connected to the second face (56) of the wall element (50) by an annular groove (100), which makes it possible to form a thinner annular part (106) assisting the deformation of the lip.

4. Device according to Claim 3, characterised in that the peripheral rim (98) is flat and situated so as to be substantially coplanar with the second face (56).

5. Device according to one of Claims 2 to 4, characterised in that the large-diameter end (96) is connected to the first face (54) of the wall element (50) by means of a shoulder (102) defining an annular housing (104) for the collar (78) on the coupling (58).

6. Device according to one of Claims 2 to 5, characterised in that the frustoconical wall (92) on the lip (90) is inclined at 30° with respect to its axis XX.

7. Device according to one of Claims 1 to 6, characterised in that the enlargement (84) on the coupling (58) has, on the one hand, a frustoconical face (86) able to move the deformable lip (90) away from the wall element (50) when the coupling is inserted and, on the other hand, an annular face (88) suitable for coming into abutment against the peripheral rim (98) on the lip (90).

8. Device according to Claim 7, characterised in that the frustoconical face (86) of the enlargement (84) forms an angle of 30° with respect to the axis.

9. Device according to one of Claims 7 and 8, characterised in that the annular face (88) of the enlargement (94) is perpendicular to the axis XX of the coupling and is connected to the frustoconical face (86) of the enlargement at a sharp angle.

## Patentansprüche

1. Vorrichtung zur Verbindung von zwei Leitungen (60, 62), die ein Wandelement (50) mit einer Durchgangsöffnung (52) und ein Verbindungsstück (58) umfaßt, das durch diese Öffnung hindurchgehen kann, um die beiden Leitungen beiderseits des Wandelements zu verbinden, wobei das Verbindungsstück (58) in Form eines Hohlkörpers ausgeführt ist, der, einander gegenüberliegend, einen ersten Ansatz (68) und einen zweiten Ansatz (70) besitzt, die an die beiden Leitungen (60 bzw. 62) angeschlossen werden können und in der Verlängerung eines Mittelteils (72) angeordnet sind, der sich in die Öffnung (52) einpassen läßt, wobei der erste Ansatz (68) mit einem Kragen (78) versehen ist, der an einer ersten Fläche (54) des Wandelements (50) zum Anschlag kommen kann, um die Einführung des Verbindungsstücks (58) mit dem zweiten Ansatz (70) zu begrenzen, während der zweite Ansatz (70) mit einem Wulst (84) versehen ist, der das Durchdrücken des zweiten Ansatzes durch die Öffnung ermöglichen und anschließend an einer zweiten Fläche (56) des Wandelements (50) zum Anschlag kommen kann , **dadurch gekennzeichnet,** daß das Wandelement (50) als verformbare Lippe (90) ausgebildet ist, welche die Öffnung (52) umgibt und schräg verläuft, um einen verengten Durchgang (94) in Richtung der zweiten Fläche (56) zu bilden, wobei diese Lippe (90) einen Umfangsrand (98) umfaßt, der sich auf der Seite der zweiten Fläche (56) befindet, um als Anschlag für den Wulst (84) des Verbindungsstücks (58) zu dienen.

2. Vorrichtung nach Anspruch 1 , **dadurch gekennzeichnet,** daß die Lippe (90) durch eine kegelstumpfförmige Wand (92) begrenzt wird, die ein Ende (94) mit kleinem Durchmesser, das an den Umfangsrand (98) angeschlossen ist, und ein Ende (96) mit großem Durchmesser aufweist, das an die erste Fläche (54) des Wandelements (50) angeschlossen ist.

3. Vorrichtung nach Anspruch 1 und 2 **, dadurch gekennzeichnet,** daß es sich beim Umfangsrand (98) um einen ringförmigen Rand handelt, der sich über eine ringförmige Nut (102) an die zweite Fläche (56) des Wandelements (50) anschließt, so daß ein ringförmiger Teil (106) mit geringerer Dicke vorgesehen werden kann, der die Verformung der Lippe begünstigt.

4. Vorrichtung nach Anspruch 3 , **dadurch gekennzeichnet,** daß der ringförmige Rand (98) flach ausgeführt und in etwa koplanar zur zweiten Fläche (56) angeordnet ist.

5. Vorrichtung nach einem der Ansprüche 2 bis 4, **dadurch gekennzeichnet,** daß sich das Ende (96) mit großem Durchmesser an die erste Fläche (54) des Wandelements (50) über eine Schulter (102) anschließt, die eine ringförmige Aufnahme (104) für den Kragen (78) des Verbindungsstücks (58) begrenzt.

6. Vorrichtung nach einem der Ansprüche 2 bis 5, **dadurch gekennzeichnet,** daß die kegelstumpfförmige Wand (92) der Lippe (90) um 30° im Verhältnis zu ihrer Achse XX geneigt ist.

7. Vorrichtung nach einem der Ansprüche 1 bis 6, **dadurch gekennzeichnet,** daß der Wulst (84) des Verbindungsstücks (58) auf einer Seite eine kegelstumpfförmige Fläche (86) umfaßt, um die verformbare Lippe (90) des Wandelements (50) bei der Einführung des Verbindungsstücks zu spreizen, und auf der anderen Seite eine ringförmige Fläche (88), um an dem Umfangsrand (98) der verformbaren Lippe (90) zum Anschlag zu kommen.

8. Vorrichtung nach Anspruch 7 , **dadurch gekennzeichnet,** daß die kegelstumpfförmige Fläche (86) des Wulstes (84) einen Winkel von 30° im Verhältnis zur Achse bildet.

9. Vorrichtung nach einem der Ansprüche 7 und 8, **dadurch gekennzeichnet,** daß die ringförmige Fläche (88) des Wulstes (84) senkrecht zur Achse XX des Verbindungsstücks verläuft und sich spitzwinklig an die kegelstumpfförmige Fläche (86) des Wulstes anschließt.
